# EUROPÄISCHE PATENTSCHRIFT

(11) **EP 0 748 646 B1**
(45) Veröffentlichungstag und Bekanntmachung des Hinweises auf die Patenterteilung: **24.11.1999**
(21) Anmeldenummer: 95115229.7
(22) Anmeldetag: 27.09.1995
(51) Int. Cl.: B01D 35/30, F02M 37/22, B01D 35/153

(54) **Flüssigkeitsfilter**
Liquid filter
Filtre de liquide

(30) Priorität: 16.06.1995 DE 29509806 U
(43) Veröffentlichungstag der Anmeldung: 18.12.1996
(73) Patentinhaber: Ing. Walter Hengst GmbH & Co. KG, 48147 Münster (DE)
(72) Erfinder: Baumann, Dieter Dipl.-Ing., D-48268 Greven (DE); Ardes, Wilhelm, D-59387 Ascheberg (DE)
(74) Vertreter: Schulze Horn, Stefan, Dipl.-Ing. M.Sc.

(56) Entgegenhaltungen:
- EP-A- 0 200 809
- BE-A- 520 432
- DE-A- 3 409 219
- DE-U- 9 411 212

## Beschreibung

Die Erfindung betrifft einen Flüssigkeitsfilter, insbesondere für Öl oder Kraftstoff einer Brennkraftmaschine, wobei das Flüssigkeitsfilter ein Filtergehäuse mit mindestens je einem Flüssigkeitszulauf- und Flüssigkeitsrücklaufkanal, einen das Filtergehäuse flüssigkeitsdicht verschließenden, lösbaren Deckel und einen aus dem Filtergehäuse entnehmbaren, einzeln austauschbaren Filtereinsatz umfaßt, wobei zentral in der im montierten Zustand dem Filteranschlußflansch zugewandten Stirnwand des Filtergehäuses eine hohle, einen axialen Flüssigkeitskanal bildende Befestigungsschraube angeordnet ist, die relativ zum Filtergehäuse verdrehbar ist und wobei das Flüssigkeitsfilter anstelle eines nur komplett austauschbaren Anschraub-Wechselfilters dichtend mit einem Filteranschlußflansch, z.B. einer Brennkraftmaschine, verschraubbar ist.

Ein Flüssigkeitsfilter der genannten Art ist aus DE-U-94 11 212 bekannt. Das Flüssigkeitsfilter nach dem Stand der Technik hat sich in den dafür vorgesehenen Anwendungen in der Praxis in allgemeinen bewährt, jedoch hat es sich herausgestellt, daß bei bestimmten Einbausituationen das bekannte Flüssigkeitsfilter nicht oder nur mit erhöhtem Montage- und Demontageaufwand einsetzbar ist.

Weiterhin ist es aus der Praxis bekannt, am Motorblock einer Brennkraftmaschine einen herkömmlichen Wegwerf-Ölfilter unter Zwischenschaltung eines Winkeladapters anzubringen. Hierbei wird als nachteilig angesehen, daß bei der erstmaligen Anbringung zunächst der Winkeladapter positioniert und angeschraubt werden muß und daß dann erst der Ölfilter selbst an dem Winkeladapter angebracht werden kann. Neben dem erhöhten Montageaufwand besteht auch ein erhöhtes Risiko von Leckagen, weil zwei Dichtbereiche vorliegen, nämlich zum einen zwischen dem maschinenseitigen Filteranschlußflansch und dem Winkeladapter einerseits und zwischen dem Winkeladapter und dem Wegwerf-Ölfilter andererseits.

Es stellt sich deshalb die Aufgabe, den Flüssigkeitsfilter der eingangs genannten Art so weiterzuentwickeln, daß es auch bei schwierigen Einbausituationen, insbesondere unter beengten räumlichen Verhältnissen, einsetzbar ist, wobei der dafür erforderliche Montage- und Demontageaufwand niedrig gehalten werden soll und bei dem das Auswechseln des Filtereinsatzes problemlos und zeitsparend möglich sein soll.

Die Lösung dieser Aufgabe gelingt erfindungsgemäß durch einen Flüssigkeitsfilter der eingangs genannten Art, welcher dadurch gekennzeichnet ist, daß die Längsmittelachse des Filtergehäuses und die Ebene der Stirnwand in einem Winkel < 90° zueinander angeordnet sind und daß die Längsmittelachse der Befestigungsschraube und die Ebene der Stirnwand im Montagezustand in einem rechten Winkel zueinander verlaufen.

Das Flüssigkeitsfilter gemäß der vorliegenden Erfindung bietet zum einen den Vorteil einer sehr einfachen Montage, weil ein separater Winkeladapter nicht mehr benötigt wird. Hierdurch entfällt auch ein Dichtbereich, so daß die Gefahr von Leckagen halbiert wird. Zum anderen wird der Vorteil erreicht, daß das Filtergehäuse durch Drehung um die Befestigungsschraube in unterschiedlichen Richtungen relativ zum Filteranschlußflansch ausgerichtet und dann an diesem festgelegt werden kann. Hierdurch kann unterschiedlichen Einbausituationen Rechnung getragen werden, ohne daß dafür jeweils verschiedene und besonders angepaßte Filtergehäuse benötigt werden.

Um die Montage des Flüssigkeitsfilters am Filteranschlußflansch möglichst einfach zu halten, ist bevorzugt vorgesehen, daß die axiale Länge des Filtergehäuses von der Stirnwand ausgehend so bemessen ist, daß die axiale Projektion der Befestigungsschraube das Filtergehäuse nicht schneidet. Hiermit wird erreicht, daß ein längliches Werkzeug, z.B. ein Steckschlüssel, in einer mit der Längsachse der Befestigungsschraube fluchtenden Richtung mit dieser in Eingriff gebracht werden kann, um die Befestigungsschraube ein- oder auszuschrauben. Die umständlichere Verwendung von in ihrem Verlauf abgewinkelten Schraubwerkzeugen, die ein Umsetzen nach einem gewissen Drehwinkelbereich erfordern, wird hierdurch vermieden.

Bevorzugt beträgt der Winkel zwischen der Längsmittelachse des Filtergehäuses und der Ebene der Stirnwand zwischen 15 und 45°, wodurch im allgemeinen allen in der Praxis auftretenden Anwendungsfällen Rechnung getragen werden kann.

Zur Vereinfachung der Anbringung des Flüssigkeitsfilters am Filteranschlußflansch ist bevorzugt vorgesehen, daß die Befestigungsschraube unverlierbar in der Stirnwand des Filtergehäuses gehaltert ist. Hierdurch kann auch bei "hängendem" Einbau des Flüssigkeitsfilters die Anbringung des Filtergehäuses ohne Schwierigkeiten erfolgen, da es genügt, außen das Filtergehäuse mit einer Hand zu halten und dann die in der Stirnwand des Filtergehäuses gehalterte Befestigungsschraube zu verdrehen.

Um gängige Schraubwerkzeuge für die Anbringung des Flüssigkeitsfilters benutzen zu können, ist bevorzugt vorgesehen, daß die Befestigungsschraube an ihrem zum Deckel weisenden Ende einen Innen- und/oder Außenmehrkant als Schraubwerkzeugansatz aufweist. Die Benutzung von Spezialwerkzeugen, wie z.B. Bandschlüsseln oder Schraubenschlüsseln in extremen Größen, wird dadurch vermieden.

Weiterhin ist bevorzugt vorgesehen, daß radial außen in der dem Filteranschlußflansch zugewandten Fläche der Stirnwand des Filtergehäuses eine Ringnut zur Aufnahme eines Dichtringes vorgesehen ist, wobei in entspanntem Zustand des Dichtringes dieser aus der Nut vorsteht und wobei in montiertem Zustand des Flüssigkeitsfilters der Dichtring unter elastischer Verformung vollständig innerhalb der Ringnut liegt. Hiermit wird erreicht, daß die einander zugewandten Flächen von Filteranschlußflansch und Stirnwand des Filtergehäuses im fest verschraubten Zustand der Befestigungsschraube unmittelbar aufeinanderliegen, so daß eine hohe Sicherheit gegen ein ungewolltes Losdrehen des Filtergehäuses bzw. der Befestigungsschraube erreicht wird. Zugleich wird der Dichtring mechanisch entlastet, so daß dieser eine höhere Lebensdauer erreicht, ohne daß die Sicherheit seiner Dichtwirkung beeinträchtigt wird.

Damit bei einem Wechsel des Filtereinsatzes keine Flüssigkeit, z.B. Öl oder Kraftstoff, in die Umgebung gelangt und diese verschmutzt, wird vorgeschlagen, daß im Filtergehäuse in dessen im montierten Zustand tiefsten Bereich zusätzlich ein Flüssigkeitsablaßkanal vorgesehen ist und daß im Filtergehäuse innerhalb des Flüssigkeitsablaßkanals ein Ablaßventil angeordnet ist, welches durch den in das Filtergehäuse eingesetzten Filtereinsatz bei geschlossenem Deckel in Schließstellung gehalten wird und welches beim Öffnen des Deckels unter Mitnahme des Filtereinsatzes selbsttätig in seine Öffnungsstellung geht. Mittels dieses an sich bekannten Flüssigkeitsablaßventils wird das Innere des Filtergehäuses ohne weitere Maßnahmen dadurch entleert, daß der Deckel gelöst und der Filtereinsatz aus dem Filtergehäuse herausbewegt wird. Eine Umweltverschmutzung wird so wirksam vermieden.

Eine erste Ausgestaltung der vorangehend beschriebenen Ausführung des Flüssigkeitsfilters sieht vor, daß der Flüssigkeitsablaßkanal mit einem am Filteranschlußflansch vorgesehenen Flüssigkeitsablaßkanal korrespondiert. Auf diese Weise wird erreicht, daß für die Entleerung des Flüssigkeitsfilters keine externen Leitungen benötigt werden, wobei allerdings dann der Filteranschlußflansch entsprechend mit einem passend angeordneten Flüssigkeitsablaßkanal ausgeführt sein muß.

Eine dazu alternative Ausgestaltung, die insbesondere für eine Nachrüstung verwendbar ist, sieht vor, daß der Flüssigkeitsablaßkanal in einen außerhalb des Filteranschlußflansches liegenden Rohr- oder Schlauchanschlußstutzen geführt ist, an welchen eine Rohr- oder Schlauchleitung für einen Flüssigkeitsablaß in einen drucklosen Flüssigkeitsvorrat oder -sammelraum anschließbar ist. Diese Ausgestaltung des Flüssigkeitsfilters ermöglicht auch eine Verwendung in solchen Fällen, in denen der Filteranschlußflansch in seiner Gestaltung festgelegt und somit für Zwecke der Entleerung des Flüssigkeitsfilters nicht veränderbar ist. Die an den Rohr- oder Schlauchanschlußstutzen anschließbare Rohr- oder Schlauchleitung kann dann zu einer geeigneten Stelle, z.B. in den Ölsumpf einer Brennkraftmaschine im Falle eines Ölfilters oder in den Kraftstofftank im Falle eines Kraftstoffilters, geführt werden. Da die Rohr- oder Schlauchleitung nur einmal angebracht werden muß, hält sich der Montage-Mehraufwand, der durch die externe Leitung verursacht wird, in Grenzen.

Eine alternative Ausgestaltung des Flüssigkeitsfilters ist dadurch gekennzeichnet, daß umfangsseitig im Filtergehäuse und/oder umfangs- oder stirnseitig im Deckel eine im Betrieb verschlossene, bedarfsweise freigebbare Flüssigkeitsablaßöffnung zur Entleerung des Filtergehäuses vorgesehen ist. Aufgrund der weiter oben erläuterten freien Positionierbarkeit des Filtergehäuses in seiner Umfangsrichtung kann ohne weiteres eine umfangsseitig im Filtergehäuse vorgesehene Flüssigkeitsablaßöffnung so positioniert werden, daß sie im montiertem Zustand des Filtergehäuses nach unten weist, um bei Öffnung der Flüssigkeitsablaßöffnung eine praktisch vollständige Entleerung des Filtergehäuses zu gewährleisten. Hierdurch wird ein unkontrollierter Flüssigkeitsaustritt, z.B. von Öl oder Kraftstoff, bei einem Filtereinsatzwechsel vermieden. Außerdem enthält der entnommene Filtereinsatz nur noch sehr geringe Restmengen an Flüssigkeit, wodurch auch hier ein weiterer Beitrag zur Entlastung der Umwelt geleistet wird. Die gleichen Vorteile ergeben sich bei einem Filtergehäuse, das in Vertikalrichtung "hängend" angeordnet ist, wobei dann der Deckel nach unten weist, so daß durch die im Deckel vorgesehene Flüssigkeitsablaßöffnung eine vollständige Entleerung des Filtergehäuses vor dem Öffnen des Deckels möglich ist.

Bevorzugt ist die Flüssigkeitsablaßöffnung durch eine mittels einer lösbaren Schraube verschlossene Durchbrechung oder Gewindebohrung gebildet, wodurch eine einfache Herstellung des Filters und eine einfache Bedienung gewährleistet werden.

Um ein Leerlaufen des Filters bei Nichtbetrieb, z.B. bei Stillstand einer zugehörigen Brennkraftmaschine, zu verhindern und um zu vermeiden, daß bei geöffnetem Filtergehäuse gefilterte Flüssigkeit z.B. Öl aus einer Brennkraftmaschine, nach außen austritt, wird vorgeschlagen, daß in dem axialen Flüssigkeitskanal in der Befestigungsschraube, d.h. auf der Reinseite, ein Rücklaufsperrventil angeordnet ist.

Zur Erzielung des gleichen doppelten Zwecks, hier aber auf der Rohseite, ist an der Stirnwand des Filtergehäuses filtergehäuseseitig eine Rücklaufsperrmembran vorgesehen, die zwischen Zulaufkanal und Filtereinsatz im Strömungsweg der zu filternden Flüssigkeit liegt. Bevorzugt ist die Rücklaufsperrmembran flexibel und kreisringförmig ausgebildet und an ihrem radial inneren Rand gehaltert. Hierdurch wird eine einfache Herstellung der Rücklaufsperrmembran und eine mit geringem Aufwand ausführbare Halterung der Rücklaufsperrmembran erreicht.

Um den Innenumfang des Filtereinsatzes abstützen zu können, wird vorgeschlagen, daß der Deckel mit einem mit dem Filtereinsatz fluchtenden Stützkörper für eine Faltenabstützung am Innenumfang eines im Filtergehäuse als Filtereinsatz angeordneten hohlzylindrischen, zickzackförmig gefalteten Sternfiltereinsatzes verbunden oder einstückig ausgeführt ist.

Eine Weiterbildung der zuletzt erläuterten Ausführung des Flüssigkeitsfilters schlägt vor, daß in dem Stützkörper ein Bypass-Ventil vorgesehen ist, durch welches bei Überschreiten einer vorgebbaren Druckdifferenz zwischen Rohseite und Reinseite des Flüssigkeitsfilters ein unmittelbarer Strömungsweg von der Rohseite zur Reinseite unter Umgehung des Filtereinsatzes freigebbar ist. Auf diese Weise wird sichergestellt, daß zumindest noch ein Flüssigkeitsdurchtritt durch den Filter möglich ist, wenn der Filtereinsatz undurchlässig geworden ist, um beispielsweise die Kraftstoff- oder Schmierölversorgung einer Brennkraftmaschine weiter zu ermöglichen.

Um im zuletzt beschriebenen Betriebsfall zumindest eine gewisse Filterung der durch den Filter strömenden Flüssigkeit zu gewährleisten, wird vorgeschlagen, daß im Verlauf des unmittelbaren Strömungsweges von der Rohseite zur Reinseite des Filters ein Bypass-Filterelement angeordnet ist. Hierdurch werden zumindest grobe Verunreinigungen der durch den Filter strömenden Flüssigkeit noch abgefangen, wodurch unter Umständen größere Schäden z.B. an einer zugehörigen Brennkraftmaschine vermieden werden können.

Zur Erleichterung der Filterwartung wird vorgeschlagen, daß der Deckel oder der Stützkörper einerseits und der Filtereinsatz andererseits mit miteinander in Eingriff bringbaren Rastverbindungsmitteln ausgestattet sind, derart, daß bei einem Abnehmen des Deckels vom Filtergehäuse der Filtereinsatz aus dem Gehäuse heraus mitgenommen wird. Nach dem Herausnehmen des Filtereinsatzes aus dem Filtergehäuse mittels Lösen des Deckels kann dann problemlos die Rastverbindung zwischen Filtereinsatz und Deckel gelöst werden und es kann dann ein frischer Filtereinsatz mit dem Deckel verrastet und anschließend in umgekehrter Weise wieder in das Filtergehäuse eingebaut werden, indem der Deckel mit dem Filtergehäuse wieder verbunden, beispielsweise verschraubt wird. Gleichzeitig sorgt die Verbindung zwischen dem Deckel oder Stützkörper einerseits und dem Filtereinsatz andererseits dafür, daß bei einem Lösen des Deckels sofort auch der Filtereinsatz relativ zum Filtergehäuse in Entnahmerichtung bewegt wird. Bei Ausführungen des Filters mit einem Flüssigkeitsablaßventil wird so für eine frühestmögliche Öffnung des Ablaßventils gesorgt, so daß ausreichend Zeit für ein vollständiges Leerlaufen des Filtereinsatzes und des Filtergehäuses bleibt, bis der Deckel vollständig geöffnet ist und der Filtereinsatz aus dem Gehäuse herusgenommen wird. Ein Austritt der zu filternden Flüssigkeit in die Umwelt bei der Filterwartung wird damit sicher verhindert, weil für das Entleeren des Filtergehäuses keine besonderen Handgriffe erforderlich sind.

Der Stützkörper kann mit dem Deckel verbunden oder einstückig ausgeführt sein; alternativ kann der Stützkörper auch als Teil des Filtergehäuses ausgebildet sein, wobei dann bevorzugt der Stützkörper lösbar mit dem Filtergehäuse verbunden ist, um die Zugänglichkeit der Befestigungsschraube nicht einzuschränken. Außerdem besteht noch die Möglichkeit, den Stützkörper als Teil des Filtereinsatzes auszuführen, wobei dann der Stützkörper entweder lose innerhalb des Filtereinsatzes zwischen den Stirnscheiben angeordnet oder als Teil einer oder beider Stirnscheiben ausgeführt sein kann.

Bevorzugt ist vorgesehen, daß der Stützkörper mit dem Deckel verbunden, z.B. verklemmt oder verrastet ist und daß auch das in dem Stützkörper gegebenenfalls vorgesehene Bypass-Ventil als mit dem Stützkörper verbindbare, bevorzugt verrastbare Baueinheit ausgeführt ist. Zusätzlich kann auch das gegebenenfalls vorgesehene Bypass-Filterelement schon an dem Deckel gehaltert sein, so daß eine große Baueinheit, bestehend aus Deckel, Stützkörper, Bypass-Ventil, Bypass-Filterelement und Filtereinsatz gebildet werden kann. Dies vereinfacht die Montage und Wartung des erfindungsgemäßen Flüssigkeitsfilters erheblich.

In vielen Fällen ist es sinnvoll oder erforderlich, die zu filternde Flüssigkeit auch zu kühlen oder zu erwärmen, wozu neben dem Filter ein Wärmetauscher vorzusehen ist. Eine aus der Praxis bekannte Möglicheit besteht darin, einen separaten Wärmetauscher zwischen dem Filteranschlußflansch und dem Flüssigkeitsfilter anzuordnen. Nachteilig erfordert dies aber zusätzlichen Einbauraum und einen erhöhten Montageaufwand. Hier bietet das erfindungsgemäße Flüssigkeitsfilter alternativ die Möglichkeit einer integrierten Ausbildung des Wärmetauschers.

Eine erste diesbezügliche Lösung schlägt vor, daß das Filtergehäuse Flüssigkeitskanäle und einen Anschlußflansch für einen von der zu filternden oder gefilterten Flüssigkeit und von einer zweiten Flüssigkeit durchströmbaren, anflanschbaren Wärmetauscher aufweist. Hierdurch können auch bei beengten Verhältnissen, wie sie z.B. häufig im Motorraum bei Kraftfahrzeugen auftreten, unter guter Raumausnutzung Wärmetauscher und Flüssigkeitsfilter kombiniert werden.

Eine alternative Lösung hinsichtlich des Wärmetauschers schlägt vor, daß das Filtergehäuse einstückig mit einem Wärmetauscher oder einem Wärmetauschergehäuse zur Aufnahme eines Wärmetauschers ausgebildet ist, wobei der Wärmetauscher von der zu filternden oder gefilterten Flüssigkeit und von einer zweiten Flüssigkeit durchströmbar ist. Auch hier besteht der Vorteil einer sehr kompakten Bauweise.

Das Filtergehäuse ist bevorzugt ein Leichtmetall-Druckgußteil, z.B. aus einer Aluminium- oder Magnesiumlegierung. Der zum Verschließen des Filtergehäuses dienende Deckel kann wahlweise ein Kunststoff-Spritzgußteil oder ebenfalls ein Leichtmetall-Druckgußteil sein. Die Befestigungsschraube ist aufgrund der von dieser aufzunehmenden mechanischen Belastungen vorzugsweise ein Stahlteil, das spanabhebend bearbeitet ist. Die verschiedenen Dichtringe sowie die Rücklaufsperrmembran sind, wie üblich, bevorzugt Elastomerteile. Der Stützkörper und das mit diesem gegebenenfalls integriert ausgebildete Bypass-Ventil sind bevorzugt ebenfalls Kunststoff-Spritzgußteile. Dies gilt auch für das in der Befestigungsschraube gegebenenfalls vorgesehene Rücklaufsperrventil. Der Filtereinsatz besteht vorteilhaft aus Materialien, die eine vollständige thermische Verwertung nach Gebrauch erlauben, z.B. aus Filterpapier für den Filterkörper und Kunststoff, z.B. Polyamid, für die Stirnscheiben und Filz oder Gummi für die Dichtungen an den Stirnscheiben.

Ausführungsbeispiele der Erfindung werden im folgenden anhand einer Zeichnung erläutert. Die Figuren der Zeichnung zeigen jeweils im Längsschnitt:
- Figur 1: ein Flüssigkeitsfilter in einer ersten Ausführung,
- Figur 2: das Flüssigkeitsfilter in einer zweiten Ausführung,
- Figur 3: das Flüssigkeitsfilter in einer dritten Ausführung in einem stirnseitigen Ausschnitt,
- Figur 4: das Flüssigkeitsfilter in einer vierten Ausführung, und
- Figur 5: das Flüssigkeitsfilter in einer fünften Ausführung.

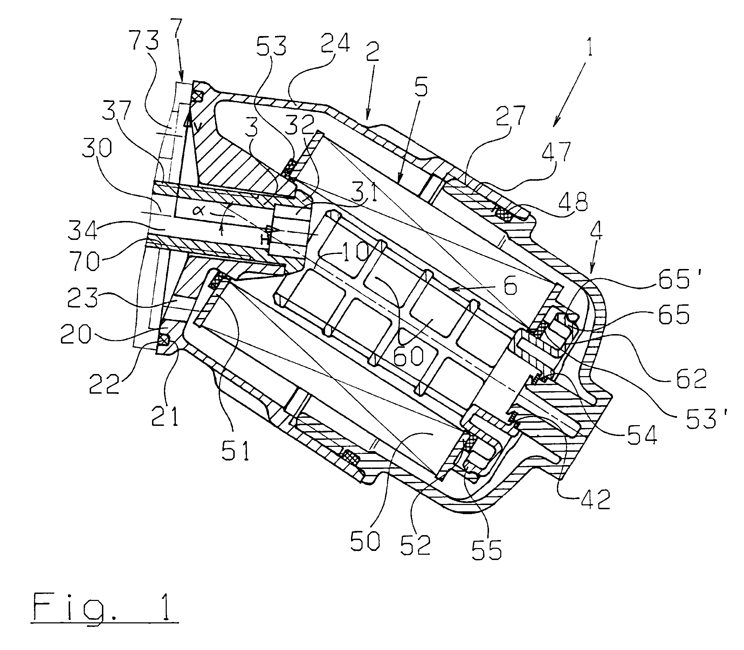

Figur 1 der Zeichnung zeigt als erstes Ausführungsbeispiel ein Flüssigkeitsfilter 1 in einer Einbausituation, in der es schräg nach unten weisend montiert ist. Das Flüssigkeitsfilter 1 besitzt ein im wesentlichen becherförmiges Filtergehäuse 2, das durch eine Stirnwand 20 und eine Umfangswand 24 gebildet ist. An ihrer nach aussen, d.h. in der Zeichnung nach links weisenden Seite trägt die Stirnwand 20 eine Ringnut 21, in welcher ein Dichtring 22 aus einem Elastomer angeordnet ist. In Radialrichtung dazu nach innen versetzt ist ein Zulaufkanal 23 im unteren Teil der stirnwand 20 erkennbar, wobei üblicherweise mehrere derartige Zulaufkanäle 23 über den Umfang der Stirnwand 20 verteilt vorgesehen sind. Im Zentrum der Stirnwand 20 ist eine zentrale Befestigungsschraube 3 verdrehbar angeordnet, die mit einem Außengewinde 37 ausgebildet ist. Mittels eines Kragens 32 ist die Befestigungsschraube 3 innen an der Stirnwand 20 abgestützt.

Im linken Teil der Figur 1 ist ein Filteranschlußflansch 7 erkennbar, der z.B. Teil eines Motorblocks einer Brennkraftmaschine sein kann. Im oberen Teil des Filteranschlußflansches 7 liegt ein Zulaufkanal 73, durch welchen zu filternde Flüssigkeit zum Zulaufkanal 23 in der Stirnwand 20 des Flüssigkeitsfilters 1 gelangt. Das hohle Innere der Befestigungsschraube 3 bildet hier einen Rücklaufkanal 34, wobei die hohle Befestigungsschraube 3 mit ihrem Außengewinde 37 in eine Gewindebohrung mit einem passenden Gegengewinde 70 in dem Filteranschlußflansch 7 eingeschraubt ist. Hierdurch wird gleichzeitig das Filtergehäuse 2 gegen den Filteranschlußflansch 7 verspannt und mittels des Dichtringes 22 abgedichtet.

An seiner in Figur 1 nach rechts weisenden Seite ist das Filtergehäuse 2 offen ausgebildet und besitzt an der Innenseite seiner Umfangswand 24 ein Innengewinde 27. In dieses Innengewinde 27 ist ein Deckel 4 mittels eines passenden Außengewindes 47 unter Zwischenlage eines weiteren Dichtringes 48 dichtend eingeschraubt.

Im Inneren des Flüssigkeitsfilters 1 ist weiterhin ein Filtereinsatz 5 angeordnet, der aus einem zickzackförmig gefalteten Filterstoffkörper 50 besteht, der oben und unten mit je einer Stirnscheibe 51, 52 flüssigkeitsdicht verbunden, z.B. verklebt oder verschweißt ist. Die in der Figur 1 linke Stirnscheibe 51 ist unter Zwischenlage einer Dichtung 53 dichtend auf einem stutzenförmigen Fortsatz der Stirnwand 20 des Filtergehäuses 2 aufgesteckt.

Mit der Innenseite des Deckels 4 unter Zwischenlage einer Dichtung 54 ist ein zentraler Stützkörper 6 verbunden, der eine im wesentlichen hohlzylindrische, gitterartige Struktur besitzt und zur Abstützung des Innenumfangs des Filterstoffkörpers 50 dient. Mit seinem deckelseitigen Ende 62 ist der Stützkörper 6 an dem Deckel 4 gehaltert, wozu dieser eine Stützkörperaufnahme 42 an seiner Innenseite aufweist. Auf das dekkelseitige Ende 62 des Stützkörpers 6 ist die rechte Stirnscheibe 52 des Filtereinsatzes 5 unter Zwischenlage einer weiteren Dichtung 53' aufgesetzt. Weiterhin ist diese rechte Stirnscheibe 52 mit zur freien Seite hin vorragenden Rastaufnahmen 55 versehen, die mit Rastnasen 65', welche an Rastzungen 65 des zentralen Stützkörpers 6 angebracht sind, zusammenwirken. Hierdurch ist eine rastende Verbindung zwischen dem Filtereinsatz 5 und dem zentralen Stützkörper 6 herstellbar, wodurch der Deckel 4 mit dem Stützkörper 6 und dem Filtereinsatz 5 zu einer gemeinsam handhabbaren Baueinheit zusammenfügbar ist.

An ihrem freien, zum Inneren des Filtergehäuses 2 weisenden Ende ist die Befestigungsschraube 3 mit einem Innensechskant 31 ausgebildet, der zum Ansetzen eines Schraubwerkzeuges dient.

Wie die Figur 1 der Zeichnung weiter zeigt, verläuft die Längsachse 30 der Befestigungsschraube 3, wie üblich, unter einem rechten Winkel zur Ebene der Stirnwand 20 und zur Ebene des Filteranschlußflansches 7. Die Längsmittelachse 10 des Flüssigkeitsfilters 1 verläuft dagegen zur Längsachse 30 der Befestigungsschraube 3 abgewinkelt, hier unter einem Winkel α, im dargestellten Ausführungsbeispiel etwa 25°. Im dargestellten Ausführungsbeispiel weist der Deckel 4 des Flüssigkeitsfilters 1 schräg nach unten; dasselbe Filter 1 kann auch in anderen Einbaulagen montiert werden, da die Stirnwand 20 bei gelöster Befestigungsschraube 3 frei gegenüber dieser und gegenüber dem Filteranschlußflansch 7 verdrehbar ist. Hierdurch kann das Filtergehäuse 2 in jeder beliebigen Richtung weisend an dem Filteranschlußflansch 7 befestigt werden. Dies ermöglicht eine vorteilhaft einfache Anpassung an unterschiedliche Einbausituationen bei z.B. verschiedenen Brennkraftmaschinen, ohne daß jeweils ein anderes Filtergehäuse 2 erforderlich wird.

Das zuvor beschriebene Flüssigkeitsfilter ist insbesondere dazu geeignet, herkömmliche nur komplett austauschbare Anschraub-Wechselfilter zu ersetzen. Bei der ersten Montage des Flüssigkeitsfilters 1 wird zunächst das Filtergehäuse 2 vor dem Filteranschlußflansch 7 positioniert und danach durch Verdrehen der Befestigungsschraube 3 gegen den Filteranschlußflansch 7 verspannt. Aufgrund der Verdrehbarkeit der Befestigungsschraube 3 relativ zum Filtergehäuse 2 wird bei der Montage nur die Befestigungsschraube 3 verdreht, während das Filtergehäuse 2 in Umfangsrichtung nicht bewegt wird. Hierdurch wird der Dichtring 22 an der Stirnwand 20 des Filtergehäuses 2 auch nicht in Umfangsrichtung beansprucht, wodurch sichergestellt wird, daß hier keine Undichtigkeiten infolge eines Verschiebens oder Verzerrens des Dichtringes 22 auftreten. Außerdem liegt eine metallische Fläche der Stirnwand 20 auf der üblicherweise ebenfalls metallischen Fläche des Filteranschlußflansches 7, so daß im verschraubten Zustand eine hohe Losdrehsicherheit gewährleistet ist. Zur Komplettierung des Flüssigkeitsfilters 1 muß dann lediglich noch die zuvor zusammengefügte Baueinheit aus Deckel 4, Stützkörper 6 und Filterelement 5 mit dem Filtergehäuse 2 verschraubt werden. Für einen Wechsel des Filtereinsatzes 5, wie er nach einer gewissen Betriebszeit erforderlich ist, muß lediglich der Deckel 4 abgeschraubt werden, wobei zugleich der Filtereinsatz 5 und der Stützkörper 6 aus dem Filtergehäuse 2 herausbewegt werden. Nach Abnehmen des verbrauchten Filtereinsatzes 5 von den Rastelementen 65, 65' und Aufsetzen eines frischen Filtereinsatzes 5 kann das Zusammensetzen des Flüssigkeitsfilters 1 in ebenso einfacher Art und Weise durch Wiederaufschrauben des Deckels 4 auf das Filtergehäuse 2 erfolgen. Der Filtereinsatz 5, der nun das einzige für eine Filterwartung noch auszutauschende Bauteil ist, besteht vorzugsweise aus Materialien, die eine problemlose vollständige thermische Verwertung erlauben.

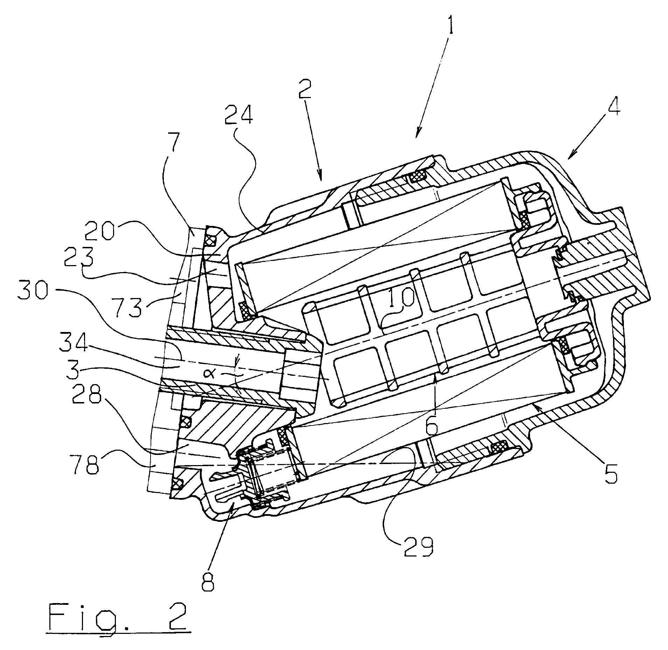

Die Figur 2 der Zeichnung zeigt eine zweite Ausführung des Flüssigkeitsfilters 1, wobei hier die Einbausituation so ist, daß der Deckel 4 schräg nach oben weist. Der Filteranschlußflansch 7 ist hier, ebenso wie bei dem Ausführungsbeispiel in Figur 1, leicht nach unten weisend geneigt, wobei der Winkel zur Vertikalen etwa 8° beträgt. Der Winkel α zwischen der Längsachse 10 des Flüssigkeitsfilters 1 und der Längsachse 30 der Befestigungsschraube 3 beträgt auch hier etwa 25°, nun aber in entgegengesetzter Richtung.

Zusätzlich ist bei dem Ausführungsbeispiel gemäß Figur 2 im Filtergehäuse 2 noch ein Flüssigkeitsablaßkanal 28 vorgesehen, der in einen Flüssigkeitsablaßkanal 78 im Filteranschlußflansch 7 mündet. In den Flüssigkeitsablaßkanal 28 im Filtergehäuse 2 ist ein Ablaßventil 8 eingebaut, wie dies an sich bekannt ist. Das Ablaßventil 8 ist so ausgeführt, daß es durch einen in das Filtergehäuse 2 eingesetzten Filtereinsatz 5 bei geschlossenem Deckel 4 in seine Schließstellung gedrückt wird. Bei einem Losdrehen des Deckels 4 und einem damit verbundenen Herausziehen des Filtereinsatzes 5 wird das Ablaßventil 8 durch Federkraft in seine Öffnungsstellung überführt, wodurch eine weitestgehende Entleerung des Inneren des Filtergehäuses 2 bis zu einem Flüssigkeitspegel 29 ermöglicht wird. Dabei erfolgt die Entleerung schon, bevor der Deckel 4 ganz abgeschraubt ist, so daß beim Herausnehmen des Filtereinsatzes 5 aus dem Filtergehäuse 2 dieser praktisch schon flüssigkeitsfrei ist.

In seinen übrigen Teilen entspricht auch das Flüssigkeitsfilter 1 gemäß Figur 2 dem zuvor beschriebenen Beispiel gemäß Figur 1.

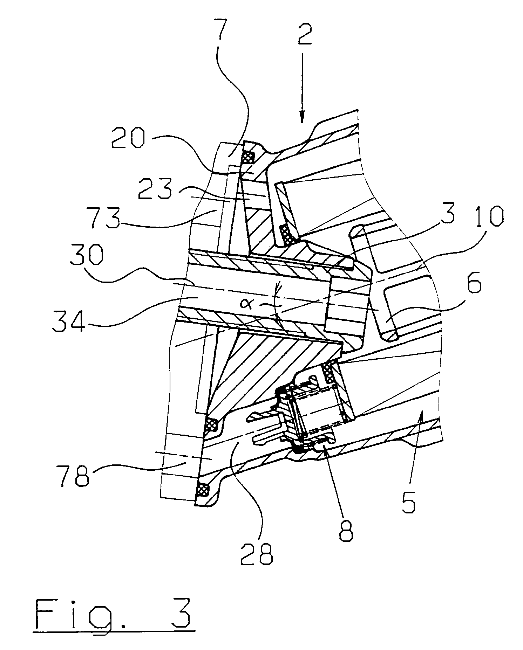

Ein weiteres Ausführungsbeispiel des Flüssigkeitsfilters 1 ist in Figur 3 anhand eines Teil-Schnittes dargestellt, der nur den unteren Teil des Filtergehäuses 2 mit der Befestigungsschraube 3 und einen Teil des Filteranschlußflansches 7 zeigt. Bei dieser Ausführung ist ebenfalls ein Flüssigkeitsablaßkanal 28 im Filtergehäuse 2 vorgesehen, wobei hier aber der Flüssigkeitsablaßkanal 28 im wesentlichen geradlinig mit einem stetig nach unten weisenden Verlauf ausgeführt ist. Auch hier ist innerhalb des Flüssigkeitsablaßkanals 28 ein Ablaßventil 8 der zuvor beschriebenen Art eingebaut. Der Vorteil dieser Ausführung gemäß Figur 3 besteht darin, daß eine vollständige Entleerung des Inneren des Filtergehäuses 2 möglich ist, da hier der Flüssigkeitsablaßkanal 28 keine Steigung, wie sie bei dem Flüssigkeitsablaßkanal 28 gemäß Figur 2 vorliegt, aufweist. Allerdings ist der Vorteil der vollständigen Entleerbarkeit bei der Ausführung gemäß Figur 3 mit einem etwas größeren Flächenbedarf hinsichtlich des Filteranschlußflansches 7 verbunden, da sich dieser weiter nach unten erstrecken muß und der Flüssigkeitsablaßkanal 78 im Filteranschlußflansch 7 tiefer angeordnet sein muß. Im übrigen entspricht die Ausführung gemäß Figur 3 der Ausführung des Flüssigkeitsfilters 1 gemäß Figur 2.

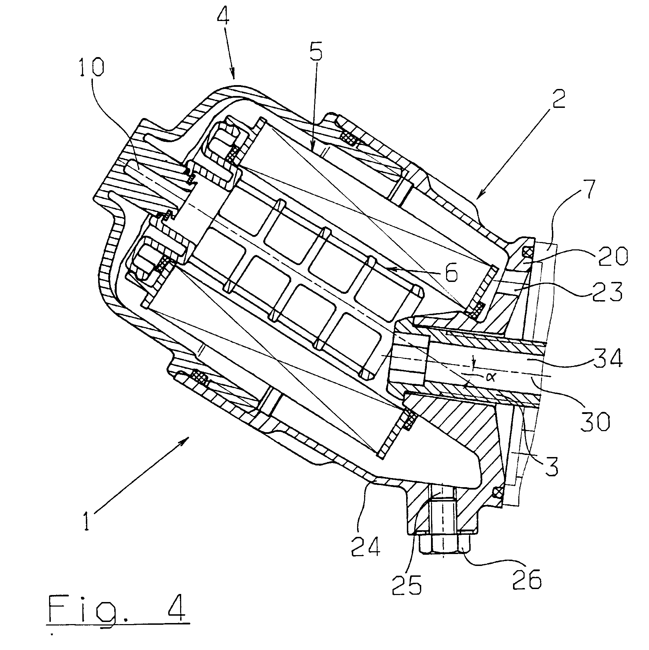

Figur 4 der Zeichnung zeigt ein Ausführungsbeispiel des Flüssigkeitsfilters 1, bei dem der Deckel 4 wieder schräg nach oben weist, wobei jedoch kein Flüssigkeitsablaßkanal innerhalb des Filteranschlußflansches 7 vorgesehen ist. Statt dessen besitzt das Ausführungsbeispiel gemäß Figur 4 einen äußeren Flüssigkeitsablaßkanal 25 in der Umfangswand 24 des Filtergehäuses 2. Im normalen Betrieb des Flüssigkeitsfilters 1 ist diese Ablaßöffnung 25 durch eine Schraube 26 mit einem untergelegten Dichtring flüssigkeitsdicht verschlossen. Soll der Filtereinsatz 5 gewechselt werden, wird zuvor durch Herausdrehen der Schraube 26 die Ablaßöffnung 25 freigegeben und das Innere des Filtergehäuses 2 vollständig von Flüssigkeit entleert. Nach dieser Entleerung und Wiedereindrehen der Schraube 26 kann dann der Deckel 4 abgeschraubt und zusammen mit diesem der Filtereinsatz 5 und der Stützkörper 6 aus dem Filtergehäuse 2 entnommen werden, wie oben schon beschrieben.

Auch bei dem Ausführungsbeispiel gemäß Figur 4 liegt zwischen der Längsachse 30 der Befestigungsschraube 3 und der Längsachse 10 des Flüssigkeitsfilters 1 ein Winkel α vor, der hier ebenfalls wieder etwa 25° beträgt. Die Ebene des Filteranschlußflansches 7 ist hier um etwa 8° zur Vertikalen nach oben weisend geneigt. In seinen übrigen Teilen entspricht das Flüssigkeitsfilter 1 gemäß Figur 4 den zuvor beschriebenen Ausführungen.

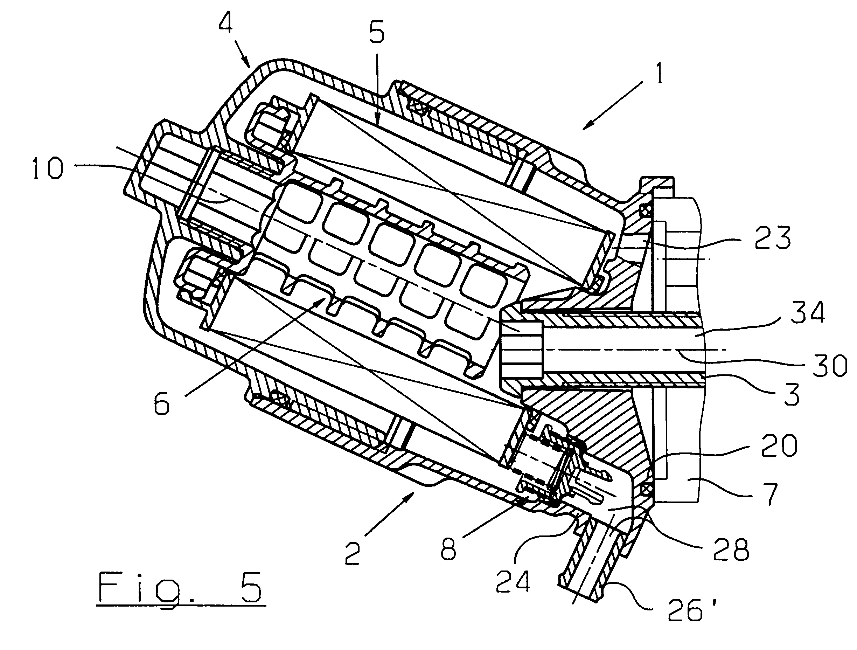

Figur 5 der Zeichnung schließlich zeigt ein Ausführungsbeispiel des Flüssigkeitsfilters 1, welches für Anwendungsfälle gedacht ist, bei denen im Gegensatz zu den Figuren 2 und 3 kein Ableitungskanal 78 im Filteranschlußflansch 7 vorhanden ist, bei denen aber dennoch eine selbstätige Entleerung des Filtergehäuses 2 bei einem Herausziehen des Filtereinsatzes 5 gewünscht wird. Um dies zu erreichen, ist in dem im montierten Zustand tiefsten Bereich des Filtergehäuses 2 wieder ein Flüssigkeitsablaßkanal 28 vorgesehen, wie auch schon bei den Ausführungsbeispielen gemäß Figur 2 und Figur 3. Bei dem Flüssigkeitsfilter 1 gemäß Figur 5 ist aber im Unterschied zu den vorhergehend erwähnten Ausführungsbeispielen der Flüssigkeitsablaßkanal 28 in einen Rohr- oder Schlauchleitungsanschlußstutzen 26' weitergeführt, der sich außerhalb des Filteranschlußflansches 7 etwa in Radialrichtung von der Umfangswand 24 des Filtergehäuses 2 nach außen erstreckt. An diesen Anschlußstutzen 26' ist eine hier nicht dargestellte Rohr- oder Schlauchleitung anschließbar, die zu einem drucklosen Flüssigkeitsvorrat oder -sammelraum führt, z.B. in die Ölwanne oder in den Kraftstofftank einer Brennkraftmaschine.

Das im Flüssigkeitsablaßkanal 28 unterhalb des Filtereinsatzes 5 angeordnete Ablaßventil 8 sorgt dafür, daß der Flüssigkeitsablaßkanal 28 bei eingesetztem Filtereinsatz 5 flüssigkeitsdicht verschlossen ist. Erst bei einem Herausbewegen des Filtereinsatzes 5 aus dem Filtergehäuse 2 gelangt das Ventil 8 in seine Öffnungsstellung, wodurch eine selbstätige Entleerung des Inneren des Filtergehäuses 2 durch den Flüssigkeitsablaßkanal 28 und den Anschlußstutzen 26' sowie die an diesem angeschlossene, nicht dargestellte Leitung erreicht wird. Damit eignet sich diese Ausführung des Flüssigkeitsfilters 1 insbesondere für Nachrüstungen, bei denen eine Änderung der Kanalführung im Filteranschlußflansch 7 unmöglich ist, wobei gleichzeitig der Vorteil einer selbstätigen Entleerung des Filtergehäuses 2 zur Vermeidung von Umweltverschmutzungen und -gefährdungen erreicht wird.

## Patentansprüche

1. Flüssigkeitsfilter, insbesondere für Öl oder Kraftstoff einer Brennkraftmaschine, wobei das Flüssigkeitsfilter (1) ein Filtergehäuse (2) mit mindestens je einem Flüssigkeitszulauf- und Flüssigkeitsrücklaufkanal (23, 34), einen das Filtergehäuse (2) flüssigkeitsdicht verschließenden, lösbaren Deckel (4) und einen aus dem Filtergehäuse (2) entnehmbaren, einzeln austauschbaren Filtereinsatz (5) umfaßt, wobei zentral in der im montierten Zustand dem Filteranschlußflansch (7) zugewandten Stirnwand (20) des Filtergehäuses (2) eine hohle, einen axialen Flüssigkeitskanal (34) bildende Befestigungsschraube (3) angeordnet ist, die relativ zum Filtergehäuse (2) verdrehbar ist, und wobei das Flüssigkeitsfilter (1) anstelle eines nur komplett austauschbaren Anschraub-Wechselfilters dichtend mit einem Filteranschlußflansch (7), z.B. einer Brennkraftmaschine, verschraubbar ist,
**dadurch gekennzeichnet**,
daß die Längsmittelachse (10) des Filtergehäuses (2) und die Ebene der Stirnwand (20) in einem Winkel < 90° zueinander angeordnet sind und daß die Längsmittelachse (30) der Befestigungsschraube (3) und die Ebene der stirnwand (20) im Montagezustand in einem rechten Winkel zueinander verlaufen.

2. Flüssigkeitsfilter nach Anspruch 1, dadurch gekennzeichnet, daß die axiale Länge des Filtergehäuses (2) von der Stirnwand (20) ausgehend so bemessen ist, daß die axiale Projektion der Befestigungsschraube (3) das Filtergehäuse (2) nicht schneidet.

3. Flüssigkeitsfilter nach Anspruch 1 oder 2, dadurch gekennzeichnet, daß der Winkel zwischen der Längsmittelachse (10) des Filtergehäuses (2) und der Ebene der Stirnwand (20) zwischen 15 und 45° beträgt.

4. Flüssigkeitsfilter nach einem der vorangehenden Ansprüche, dadurch gekennzeichnet, daß die Befestigungsschraube (3) unverlierbar in der Stirnwand (20) des Filtergehäuses (2) gehaltert ist.

5. Flüssigkeitsfilter nach einem der vorangehenden Ansprüche, dadurch gekennzeichnet, daß die Befestigungsschraube (3) an ihrem zum Deckel (4) weisenden Ende einen Innen- und/oder Außenmehrkant (31) als Schraubwerkzeugansatz aufweist.

6. Flüssigkeitsfilter nach einem der vorangehenden Ansprüche, dadurch gekennzeichnet, daß radial außen in der dem Filteranschlußflansch (7) zugewandten Fläche der Stirnwand (20) des Filtergehäuses (2) eine Ringnut (21) zur Aufnahme eines Dichtringes (22) vorgesehen ist, wobei in entspanntem Zustand des Dichtringes (22) dieser aus der Nut (21) vorsteht und wobei in montiertem Zustand des Flüssigkeitsfilters (1) der Dichtring (22) unter elastischer Verformung vollständig innerhalb der Ringnut (21) liegt.

7. Flüssigkeitsfilter nach einem der vorangehenden Ansprüche, dadurch gekennzeichnet, daß im Filtergehäuse (2) in dessen im montierten Zustand tiefsten Bereich zusätzlich ein Flüssigkeitsablaßkanal (28) vorgesehen ist und daß im Filtergehäuse (2) innerhalb des Flüssigkeitsablaßkanals (28) ein Ablaßventil (8) angeordnet ist, welches durch den in das Filtergehäuse (2) eingesetzten Filtereinsatz (5) bei geschlossenem Deckel (4) in Schließstellung gehalten wird und welches beim Öffnen des Deckels (4) unter Mitnahme des Filtereinsatzes (5) selbsttätig in seine Öffnungsstellung geht.

8. Flüssigkeitsfilter nach Anspruch 7, dadurch gekennzeichnet, daß der Flüssigkeitsableitungskanal (28) mit einem am Filteranschlußflansch (7) vorgesehenen Flüssigkeitsablaßkanal (78) korrespondiert.

9. Flüssigkeitsfilter nach Anspruch 7, dadurch gekennzeichnet, daß der Flüssigkeitsableitungskanal (28) in einen außerhalb des Filteranschlußflansches (7) liegenden Rohr- oder Schlauchanschlußstutzen (26') geführt ist, an welchen eine Rohr- oder Schlauchleitung für einen Flüssigkeitsablaß in einen drucklosen Flüssigkeitsvorrat oder -sammelraum anschließbar ist.

10. Flüssigkeitsfilter nach einem der Ansprüche 1 bis 6, dadurch gekennzeichnet, daß umfangsseitig im Filtergehäuse (2) und/oder umfangs- oder stirnseitig im Deckel (4) eine im Betrieb verschlossene, bedarfsweise freigebbare Flüssigkeitsablaßöffnung (25) zur Entleerung des Filtergehäuses (2) vorgesehen ist.

11. Flüssigkeitsfilter nach Anspruch 10, dadurch gekennzeichnet, daß die Flüssigkeitsablaßöffnung (25) durch eine mittels einer lösbaren Schraube (26) verschlossene Durchbrechung oder Gewindebohrung gebildet ist.

12. Flüssigkeitsfilter nach einem der vorangehenden Ansprüche, dadurch gekennzeichnet, daß in dem axialen Flüssigkeitskanal (34) in der Befestigungsschraube (3) ein Rücklaufsperrventil angeordnet ist.

13. Flüssigkeitsfilter nach einem der vorangehenden Ansprüche, dadurch gekennzeichnet, daß an der Stirnwand (20) des Filtergehäuses (2) filtergehäuseseitig eine Rücklaufsperrmembran vorgesehen ist.

14. Flüssigkeitsfilter nach einem der vorangehenden Ansprüche, dadurch gekennzeichnet, daß der Deckel (4) mit einem mit dem Filtereinsatz (5) fluchtenden Stützkörper (6) für eine Faltenabstützung am Innenumfang eines im Filtergehäuse (2) als Filtereinsatz (5) angeordneten hohlzylindrischen, zickzackförmig gefalteten sternfiltereinsatzes verbunden oder einstückig ausgeführt ist.

15. Flüssigkeitsfilter nach Anspruch 14, dadurch gekennzeichnet, daß in dem Stützkörper (6) ein Bypass-Ventil vorgesehen ist, durch welches bei Überschreiten einer vorgebbaren Druckdifferenz zwischen Rohseite und Reinseite des Flüssigkeitsfilters (1) ein unmittelbarer Strömungsweg von der Rohseite zur Reinseite unter Umgehung des Filtereinsatzes (5) freigebbar ist.

16. Flüssigkeitsfilter nach Anspruch 15, dadurch gekennzeichnet, daß im Verlauf des unmittelbaren Strömungsweges von der Rohseite zur Reinseite ein Bypass-Filterelement angeordnet ist.

17. Flüssigkeitsfilter nach einem der vorangehenden Ansprüche, dadurch gekennzeichnet, daß der Deckel (4) oder der Stützkörper (6) einerseits und der Filtereinsatz (5) andererseits mit miteinander in Eingriff bringbaren Rastverbindungsmitteln (65, 65'; 55) ausgestattet sind, derart, daß bei einem Abnehmen des Deckels (4) vom Filtergehäuse (2) der Filtereinsatz (5) aus dem Gehäuse (2) heraus mitgenommen wird.

18. Flüssigkeitsfilter nach einem der vorangehenden Ansprüche, dadurch gekennzeichnet, daß das Filtergehäuse (2) Flüssigkeitskanäle und einen Anschlußflansch für einen von der zu filternden oder gefilterten Flüssigkeit und von einer zweiten Flüssigkeit durchströmbaren, anflanschbaren Wärmetauscher aufweist.

19. Flüssigkeitsfilter nach einem der Ansprüche 1 bis 17, dadurch gekennzeichnet, daß das Filtergehäuse (2) einstückig mit einem Wärmetauscher oder einem Wärmetauschergehäuse zur Aufnahme eines Wärmetauschers ausgebildet ist, wobei der Wärmetauscher von der zu filternden oder gefilterten Flüssigkeit und von einer zweiten Flüssigkeit durchströmbar ist.

## Claims

1. Liquid filter particularly for oil or fuel of an internal combustion engine wherein the liquid filter (1) comprises a filter housing (2) with at least one liquid inlet and liquid outlet passage (23, 24), a releasable lid (4) closing the filter housing (2) in a liquid tight fashion, and a replaceable filter insert (5) removable from the filter housing (2) wherein centrally in the front wall (20) of the filter housing (2) facing the filter connection flange (7) when mounted a hollow fastening screw bolt (3) is arranged forming an axial liquid passage (34) with the fastening screw bolt rotatable in relation to the filter housing (2) wherein the liquid filter (1) is to be screwed to the filter connection flange (7) e.g. of an internal combustion engine in a sealing fashion instead of an interchangeable threaded filter which is only replaceable as a complete unit,
**characterized in**
that the longitudinal middle axis (10) of the filter housing (2) and the plane of the front wall (20) are arranged such that they form an angle of smaller than 90° with each other, and that the longitudinal middle axis (30) of the fastening screw bolt (3), and the plane of the front wall (20) extend in a right angle with each other when mounted.

2. Liquid filter according to claim 1, characterized in that the axial length of the filter housing (2) beginning from the front wall (20) is dimensioned such that the axial projection of the fastening screw bolt (3) does not intersect the filter housing (2).

3. Liquid filter according to claim 1 or 2, characterized in that the angle between the longitudinal middle axis (10) of the filter housing (2) and the plane of the front wall (20) is between 15 and 45°.

4. Liquid filter according to one of the preceeding claims, characterized in that the fastening screw bolt is captively secured in the front wall (20) of the filter housing (2).

5. Liquid filter according to one of the preceeding claims, characterized in that the fastening screw bolt (3) at the end facing the lid (4) comprises an inner and/or outer polygon (31) as a dog point for a screwing tool.

6. Liquid filter according to one of the preceeding claims, characterized in that an angular groove (21) for receiving a sealing ring (22) is provided radially outwards in the surface of the front wall (20) of the filter housing (2) facing the filter connection flange (7) wherein in the relaxed condition of the sealing ring (20) the sealing ring projects from the groove (21), and wherein the sealing ring (22) being elastically deformed is completely inside the angular groove (21) when the liquid filter (1) is mounted.

7. Liquid filter according to one of the preceeding claims, characterized in that in the mounted filter housing (2) in the deepest area thereof additionally a liquid drain passage (28) is provided, and that in the filter housing (2) within the liquid drain passage (28) a drain valve (8) is arranged which is maintained in a closed position by the filter insert (5) inserted in the filter housing (2) when the lid (4) is closed, and which when opening the lid (4) is automatically put in its opening position while taking the filter insert (5) with it.

8. Liquid filter according to claim 7, characterized in that the liquid drain passage (28) corresponds with a liquid drain passage (78) provided at the filter connection flange (7).

9. Liquid filter according to claim 7, characterized in that the liquid drain passage (28) is guided in a pipe or hose connection piece (26') arranged outside of the filter connection flange (7), at which pipe or hose connection piece (26') a pipe or hose line for a liquid drain is connectable to a pressureless liquid reservoir or tank.

10. Liquid filter according to one of the claims 1 to 6, characterized in that at the circumference of the filter housing (2) and/or at the circumferancial or front side in the lid (4) a liquid drain opening (25) for draining the filter housing (2) is provided which is closed during operation and may be opened when required.

11. Liquid filter according to claim 10, characterized in that the liquid drain opening (25) is formed by an opening or threaded hole to be closed by means of a releasable screw bolt (26).

12. Liquid filter according to one of the preceeding claims, characterized in that in the axial liquid passage (34) in the fastening screw bolt (3) a return check valve is arranged.

13. Liquid filter according to one of the preceeding claims, characterized in that at the front wall (20) of the filter housing (2) at the side of the filter housing a return check diaphragm is provided.

14. Liquid filter according to one of the preceeding claims, characterized in that the lid (4) is connected to or is made integral with a supporting body (6) aligned with the filter insert (5) with the connecting body (6) serving for supporting a hollow cylindrical zigzag-shaped folded star filter insert serving for supporting the foldings at the inner circumference.

15. Liquid filter according to claim 14, characterized in that in the supporting body (6) a bypass valve is provided through which a direct flow path from the crude side to the clean side of the filter insert (5) is formed bypassing the filter insert (5) when a selectable pressure difference between the crude side and the clean side of the liquid filter (1) is exceeded.

16. Liquid filter according to claim 15, characterized in that in the course of the direct flow path from the crude side to the clean side a bypass filter element is arranged.

17. Liquid filter according to one of the preceeding claims, characterized in that the lid (4) or the supporting body (6) at the one hand and the filter insert (5) at the other hand are provided with snap-in connection means (65, 65'; 55) which are to be engaged with each other such that when taking off the lid (4) from the filter housing (2) the filter insert (5) is also taken out of the housing (2).

18. Liquid filter according to one of the preceeding claims, characterized in that the filter housing (2) comprises liquid passages and a connection flange for a heat exchanger which is to be connected by a flange and which is streamed by the filtered or to be filtered liquid and a second liquid.

19. Liquid filter according to one of the claims 1 to 17, characterized in that the filter housing (2) is formed integral with a heat exchanger or a heat exchanger housing for receiving a heat exchanger wherein the heat exchanger is streamed by the filtered or to be filtered liquid and a second liquid.

## Revendications

1. Filtre à liquide, notamment pour de l'huile ou un carburant d'un moteur à combustion interne, le filtre à liquide (1) comprenant un boîtier (2) comportant au moins un canal d'amenée du liquide et un canal de retour du liquide (23,24), un couvercle amovible (4) fermant d'une manière étanche au liquide le boîtier (2) du filtre, et un insert filtrant (5) qui peut être retiré du boitier (2) du filtre et est remplaçable individuellement, dans lequel dans la paroi frontale (20) du boitier (2) du filtre, qui à l'état monté est tournée vers la bride (7) de raccordement du filtre, est disposée dans une position centrale une vis creuse de fixation (3), qui forme un canal axial (34) pour le liquide et qui peut tourner par rapport au boîtier (2) du filtre, et dans lequel le filtre à liquide (1) peut être vissé, à la place d'un filtre remplaçable vissable, qui peut être remplacé uniquement à l'état complet, avec une bride (7) de raccordement du filtre, par exemple d'un moteur à combustion interne, caractérisé en ce que l'axe médian longitudinal (10) du boîtier (2) du filtre et le plan de la paroi frontale (20) sont disposés en faisant un angle < 90° entre eux et que l'axe médian longitudinal (30) de la vis de fixation (3) et le plan de la paroi frontale (20) font entre eux un angle droit à l'état monté.

2. Filtre à liquide selon la revendication 1, caractérisé en ce que la longueur axiale du boîtier (2) du liquide à partir de la paroi frontale (20) est dimensionnée de telle sorte que la projection axiale de la vis de fixation (3) ne recoupe pas le boîtier (2) du filtre.

3. Filtre à liquide selon la revendication 1 ou 2, caractérisé en ce que l'angle entre l'axe médian longitudinal (10) du boîtier (2) du filtre et le plan de la paroi frontale (20) est compris entre 15 et 45°.

4. Filtre à liquide selon l'une des revendications précédentes, caractérisé en ce que la vis de fixation (3) est retenue d'une manière imperdable dans la paroi frontale (20) du boitier (2) du filtre.

5. Filtre à liquide selon l'une des revendications précédentes, caractérisé en ce que la vis de fixation (3) comporte, sur son extrémité tournée vers le couvercle (4), un profil polygonal intérieur et/ou extérieur (31) en tant qu'embout pour l'application d'un outil de vissage.

6. Filtre à liquide selon l'une des revendications précédentes, caractérisé en ce qu'une gorge annulaire (21) servant à loger une bague d'étanchéité (22) est prévue extérieurement, du point de vue radial, dans la surface, qui est tournée vers la bride (7) de raccordement du filtre, de la paroi frontale (20) du boîtier (2) du filtre, auquel cas, lorsque la bague d'étanchéité (22) est à l'état détendu, cette bague fait saillie hors de la gorge (21) et lorsque le filtre à liquide (1) est à l'état monté, la bague d'étanchéité (22), soumise à une déformation élastique, est située complètement à l'intérieur de la gorge annulaire (21).

7. Filtre à liquide selon l'une des revendications précédentes, caractérisé en ce qu'en outre un canal (28) d'évacuation du liquide est prévu dans la partie, qui est la plus basse à l'état monté, du boîtier (2) du filtre et que dans le boîtier (2) du filtre est disposée, à l'intérieur du canal (28) d'évacuation du liquide, une soupape d'évacuation (8) qui est retenue dans la position fermée par l'insert filtrant (5) inséré dans le boîtier (2) du filtre, lorsque le couvercle (4) est fermé et qui, lors de l'ouverture du couvercle (4), vient automatiquement dans sa position d'ouverture en entraînant l'insert filtrant (5).

8. Filtre à liquide selon la revendication 7, caractérisé en ce que le canal (28) d'évacuation du liquide correspond à un canal (78) d'évacuation du liquide, qui est prévu dans la bride (7) de raccordement du filtre.

9. Filtre à liquide selon la revendication 7, caractérisé en ce que le canal (28) d'évacuation du liquide est guidé dans une tubulure (26') de raccordement de tube ou de tuyau, qui est située à l'extérieur de la bride (7) de raccordement du filtre et à laquelle peut être raccordée une canalisation en forme de tube ou de tuyau pour une évacuation du liquide dans un réservoir ou un espace de collecte du liquide, non placé sous pression.

10. Filtre à liquide selon l'une des revendications 1 à 6, caractérisé en ce qu'une ouverture (25) d'évacuation du liquide, qui est fermée en fonctionnement et peut être éventuellement libérée et sert au vidage du boîtier (2) du filtre, est prévue sur la périphérie dans le boîtier (2) du filtre et/ou sur la périphérie ou sur la face frontale du couvercle (4).

11. Filtre à liquide selon la revendication 10, caractérisé en ce que l'ouverture (25) d'évacuation du liquide est formée par un passage ou un perçage taraudé, qui est fermé au moyen d'une vis amovible (26).

12. Filtre à liquide selon l'une des revendications précédentes, caractérisé en ce qu'une soupape antiretour est disposée dans le canal axial (34) de circulation du liquide, présent dans la vis de fixation (3).

13. Filtre à liquide selon l'une des revendications précédentes, caractérisé en ce qu'une membrane antiretour est prévue, sur le côté boîtier (2) du filtre, sur la paroi frontale (20) de ce boîtier.

14. Filtre à liquide selon l'une des revendications précédentes, caractérisé en ce que le couvercle (4) est relié à un corps de support (6), qui est aligné avec l'insert filtrant (5), pour un support des plis sur la périphérie intérieure d'un insert filtrant en étoile qui est en forme de cylindre creux, replié en zig-zag et disposé dans le boîtier (2) du filtre en tant qu'insert filtrant (5), ou est réalisé d'un seul tenant avec ce corps de support.

15. Filtre à liquide selon la revendication 14, caractérisé en ce que dans le corps de support (6) est prévue une soupape de dérivation, par laquelle une voie de circulation directe du côté du liquide brut au côté du liquide propre peut être libérée, par contournement de l'insert filtrant (5), lors du dépassement d'une différence de pression pouvant être prédéterminée, entre le côté du fluide brut et le côté du fluide propre du filtre à liquide (1).

16. Filtre à liquide selon la revendication 15, caractérisé en ce qu'un élément filtrant de dérivation est disposé dans le trajet de circulation direct allant du côté du fluide brut au côté du fluide propre.

17. Filtre à liquide selon l'une des revendications précédentes, caractérisé en ce que le couvercle (4) ou le corps de support (6) d'une part et l'insert filtrant (5) d'autre part sont équipés de moyens de liaison à encliquetage (65,65';55) qui peuvent engrener entre eux de telle sorte que, lors d'un retrait du couvercle (4) à partir du boitier (2) du filtre, l'insert filtrant (5) est retiré conjointement hors du boîtier (2).

18. Filtre à liquide selon l'une des revendications précédentes, caractérisé en ce que le boîtier (2) du filtre comporte des canaux pour liquide et une bride de raccordement pour un échangeur de chaleur pouvant être raccordé par brides et qui peut être parcouru par le liquide à filtrer ou filtré et par un second liquide.

19. Filtre à liquide selon l'une des revendications 1 à 17, caractérisé en ce que le boîtier (2) du filtre est réalisé d'un seul tenant avec un échangeur de chaleur ou un boîtier d'échangeur de chaleur servant à loger un échangeur de chaleur, l'échangeur de chaleur pouvant être traversé par le liquide à filtrer ou filtré et par un second liquide.
